# EUROPEAN PATENT APPLICATION

(11) **EP 3 663 721 A1**
(43) Date of publication of application: **10.06.2020**
(21) Application number: 19214111.7
(22) Date of filing: 06.12.2019
(51) Int. Cl.: G01C 23/00, G06F 3/01, G06K 9/00, G06T 19/00, B64D 43/00

(54) **AIRCRAFT AUGMENTED REALITY SYSTEM AND CORRESPONDING METHOD OF OPERATING**

(30) Priority: 07.12.2018 US 201816212881
(71) Applicant: GE Aviation Systems LLC, Grand Rapids, MI 49512 (US)
(72) Inventor: VENUGOPALAN, Vigneshwaran, Grand Rapids, MI 49512 (US)
(74) Representative: Openshaw & Co.

(57) **Abstract**

A method (200) for operating an aircraft (10) that includes an autonomous decision making system (30) that can be an aircraft augmented reality system (32). The aircraft augmented reality system (30, 32) can include a data module (72), an environment module (88), and a display module (90). The aircraft augmented reality system (30, 32) can receive information (202) and environmental data (204) to display (206) augmented reality data on a windshield (26) in the cockpit (16) of an aircraft (10).

## Description

### TECHNICAL FIELD

The disclosure relates to a method and apparatus for operating an aircraft with an augmented reality system.

### BACKGROUND

In contemporary aircraft, windows can be provided for a pilot to see out of; however, weather, time of day, sun glare, or obstructions can sometimes obscure visibility. A pilot can have a display device to see terrain outside of the aircraft. Such a display device can include a tablet, a control panel screen, or headgear worn by the pilot. Aircraft are also known to include response systems that can alert the pilot, provide a suggested change in flight path, or automatically change the flight path.

### BRIEF DESCRIPTION

In one aspect, the disclosure relates to an aircraft augmented reality system that includes a data module configured to receive information from a flight management system of the aircraft, an environment module to process environment data of an environment in front of the aircraft, and a display module configured to provide augmented reality data on the windshield of the aircraft, the display module configured to present a predictive virtual model of the aircraft, based on the information from the flight management system, in the environment in front of the aircraft as well as a dynamic overlay of at least one piece of information.

In another aspect, the disclosure relates to a method of operating an aircraft, the method including receiving information from a flight management system of the aircraft, receiving environment data for an environment in front of the aircraft, and displaying augmented reality data in the form of a predictive virtual model of the aircraft, based on the information from the flight management system, on the windshield of the aircraft in the environment in front of the aircraft as well as a dynamic overlay of at least one piece of information wherein the predictive virtual model of the aircraft defines a follow-me aircraft configured to activate an alert in advance of an upcoming navigational procedure.

In yet another aspect, the disclosure relates to an aircraft that includes a flight management system of the aircraft for autonomously operating the aircraft and an autonomous decision making system configured to determine a stable operating solution of the aircraft, further including a data module configured to receive information, a cost module for calculating a cost of multiple stable operating solutions and a learning module configured to learn preferences over time of the multiple stable operating solutions, wherein the autonomous decision making system is configured to select a stable operating solution from the multiple stable operating solutions and communicate the stable operating solution to the flight management system for autonomous operation of the aircraft.

### BRIEF DESCRIPTION OF THE DRAWINGS

In the drawings:
FIG. 1 is a schematic illustration of an aircraft transmitting and receiving information from at least a ground system and an other aircraft according to various aspects described herein.
FIG. 2 is a perspective view of a portion of a cockpit of the aircraft of FIG. 1.
FIG. 3 is a schematic illustration of an autonomous decision making system for use in the aircraft of FIG. 1 according to aspects described herein.
FIG. 4 is a flow chart diagram illustrating a method that can be carried out at least in part by the aircraft of FIG. 1, according to various aspects described herein.
FIG. 5 is a perspective view of an augmented reality display in the aircraft of FIG. 1 according to aspects described herein.

### DETAILED DESCRIPTION

Aspects of the present disclosure are directed to providing an aircraft with an autonomous decision making system to assist the pilot in aircraft navigation and guidance. The autonomous decision can be displayed in the cockpit including on windshields of the cockpit. The autonomous decision making system can illustrate terrain in addition to a follow-me image of an aircraft in the terrain. Further still, the autonomous decision making system can assist pilots in verifying or altering the flight path of the aircraft. The images displayed in the cockpit based on the autonomous decision making system can be a result of information or collected data that is processed by specific modules to develop the projected images displayed to the pilot. The information or collected data can be detected by the aircraft, communicated to the aircraft, or accessed from an onboard database.

As used herein, "a set" can include any number of the respectively described elements, including only one element. All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

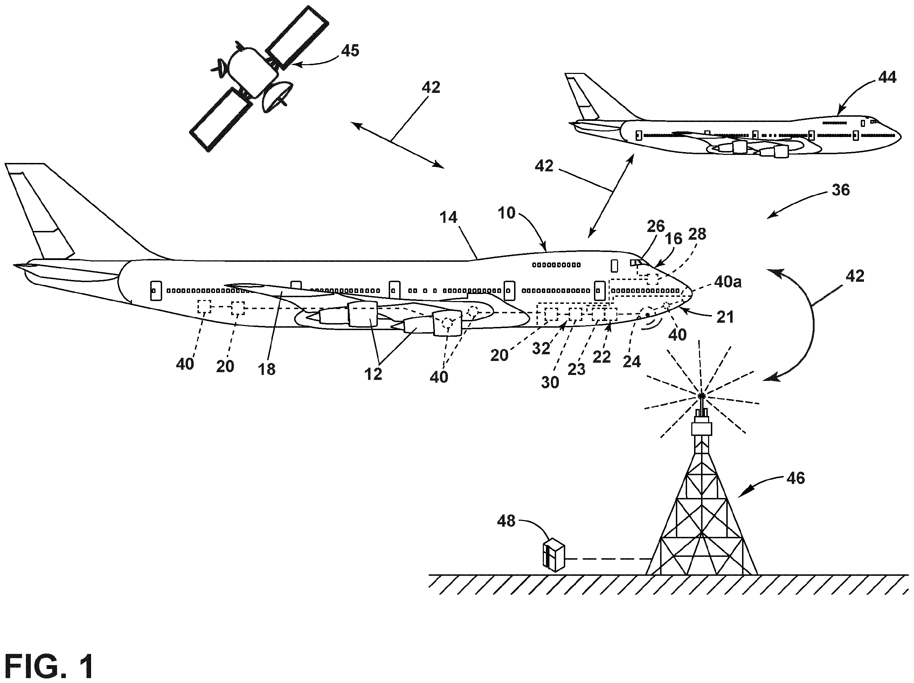

FIG. 1 depicts an exemplary aircraft 10 that can include one or more propulsion engines 12 coupled to a fuselage 14, a cockpit 16 positioned in the fuselage 14, and wing assemblies 18 extending outward from the fuselage 14. A plurality of aircraft systems 20 that enable proper operation of the aircraft 10 can be included as well as a flight management system 22, and a communication system having a wireless communication link 24. It will be understood that the flight management system 22, as described herein, can include a connected flight management system or a connected cockpit. While a commercial aircraft has been illustrated, it is contemplated that aspects of the disclosure can be used in any type of aircraft including, but not limited to, fixed-wing, rotating-wing, flying taxies, or personal aircraft.

The plurality of aircraft systems 20 can reside within the cockpit 16, within an electronics and equipment bay 21, or in other locations throughout the aircraft 10 including that they can be associated with the one or more propulsion engines 12. The aircraft systems 20 can include but are not limited to: an electrical system, an oxygen system, hydraulics and/or pneumatics system, a fuel system, a propulsion system, navigation systems, flight controls, audio/video systems, an Integrated Vehicle Health Management (IVHM) system, Onboard Maintenance System (OMS), Central Maintenance Computer (CMC), and systems associated with the mechanical structure of the aircraft 10. The aircraft systems 20 have been illustrated for exemplary purposes and it will be understood that they are only a few of the systems that can be included in the aircraft 10.

The cockpit 16 can include a set of windshields 26 also commonly referred to as windows or windscreens, which provide for viewing outside the aircraft as well as structural integrity. At least one display 28 configured to display a variety of parameters that can include flight time, fuel consumption, weather conditions, pilot advisories, air traffic information, augmented reality data, or current heading can also be included in the cockpit 16. The at least one display 28 can include an electronic screen, and can also be configured to receive user input via a touchscreen, keyboard, buttons, dials, or other input devices.

The flight management system 22 can include a flight management computer 23. The flight management system 22 can, among other things, automate the tasks of piloting and tracking the flight plan of the aircraft 10. The flight management system 22 can include or be associated with any suitable number of individual microprocessors, power supplies, storage devices, interface cards, auto flight systems, flight management computers, and other standard components. The flight management system 22 can include or cooperate with any number of software programs (e.g., flight management programs) or instructions designed to carry out the various methods, process tasks, calculations, and control/display functions necessary for operation of the aircraft 10.

An autonomous decision making system 30 can, in one example, be in the form of an aircraft augmented reality system 32. The autonomous decision making system 30 is illustrated as being in communication with the flight management system 22, the plurality of aircraft systems 20, the wireless communication link 24, and the at least one display 28. It is contemplated that either or both the flight management system 22 and autonomous decision making system 30 can aid in operating the aircraft systems 20 and can send and receive information from each other or to and from the aircraft systems 20. While shown separately it will also be understood that the autonomous decision making system 30 can be one of the plurality of aircraft systems 20 or incorporated into one of the plurality of aircraft systems 20. Alternatively, the autonomous decision making system 30 can be included in the flight management system 22 or the flight management computer 23.

The wireless communication link 24 can be communicably coupled to the flight system 22, the autonomous decision making system 30, or any other suitable processors of the aircraft 10. The wireless communication link 24 can be any variety of communication mechanism capable of wirelessly linking with other systems and devices both inside and outside the aircraft 10 and can include, but is not limited to, packet radio, satellite uplink, Wireless Fidelity (Wi-Fi), WiMax, Bluetooth, ZigBee, 3G wireless signal, Code Division Multiple Access (CDMA) wireless signal, Global System for Mobile communication (GSM), 4G wireless signal, 5G wireless signal, Long Term Evolution (LTE) signal, Ethernet, or any combinations thereof. It will also be understood that the particular type or mode of wireless communication is not critical to this disclosure, and later-developed wireless networks are certainly contemplated as within the scope of this disclosure. Further, the wireless communication link 24 can be communicably coupled with the autonomous decision making system 30 or the flight management system 22 through a wired link without changing the scope of this disclosure. Although only one wireless communication link 24 has been illustrated, it is contemplated that the aircraft 10 can have multiple wireless communication links communicably coupled with the autonomous decision making system 30, the flight management system 22 or other onboard or off board devices or systems for receiving or sending information. Such multiple wireless communication links can provide the aircraft 10 with the ability to transfer flight data onto or off of the aircraft 10 in a variety of ways such as by satellite, GSM, and Wi-Fi.

Further still it has been illustrated that sensors 40 can be provided on or within the aircraft 10. The sensors 40 can include any number of communication or detection components that can be, but are not limited to, receivers, transponders coupled with a receiver, transmitters coupled with a receiver, sonic detectors or devices, passive radar, optical detectors or devices, or electromagnetic wave detectors or devices. The sensors 40 can be operably coupled to the flight management system 22, the autonomous decision making system 30, any of the aircraft systems 20, or another controller onboard the aircraft 10. The sensors 40 can function as receivers that can receive optical, radio, sonic, electromagnetic, or other signals. The sensors 40 can also receive real-time environmental data, real-time traffic data, real-time flight data, or other real-time data about the surroundings and flight plan of the aircraft 10, and act as receivers for additional signals. The sensors 40 can also include a receiver adapted to receive signals 42 from an other aircraft 44, a satellite 45, or a ground system 46. Alternatively, the receiver can be a separate apparatus communicatively linked to the flight management system 22, the autonomous decision making system 30, or other portions of the aircraft 10.

It is contemplated that the sensors 40 can be operably coupled with the wireless communication link 24. It is further contemplated that the sensors 40 or the wireless communication link 24 can receive information relayed from another location such, but not limited to, a system wide information management (SWIM) network 36 which can include the other aircraft 44 or the ground system 46. The SWIM network can further include, but is not limited to, air traffic control towers, airline operation centers, or weather detection devices or locations.

Further still, the sensors 40 can function as transmitters that can send optical, radio, sonic, electromagnetic, or other signals. Among other things, the sensors 40 can be capable of sensing and providing real-time environmental data, real-time traffic data, real-time flight data, or other real-time data as requested by the aircraft 10.

At least one optical sensor 40a, by way of non-limiting example, can be mounted to the aircraft 10 and positioned to obtain image data. The image data obtained by the at least one optical sensor 40a can be, by way of non-limiting example, an environment in front of the aircraft or terrain information in the direction of a projected or calculated flight path of the aircraft 10. By way of non-limiting example, the at least one optical sensor 40a can be an external facing optical capture system. The external facing optical capture system can include, by way of non-limiting example, a camera including by way of non-limiting example a digital camera.

A computer or destination server 48 is also illustrated and can indirectly communicate via the ground system 46 with the aircraft 10. The computer or destination server 48 can be located at or in communication with the ground system 46. The ground system 46 can be any type of communicating ground system such as an airline operations center. The computer or destination server 48 or other aspects of the ground system 46 can communicate information. The information can include, but is not limited to, the environment in front of the aircraft, weather information, environmental data, terrain information, traffic data, flight data, or other data that can be real-time or historical.

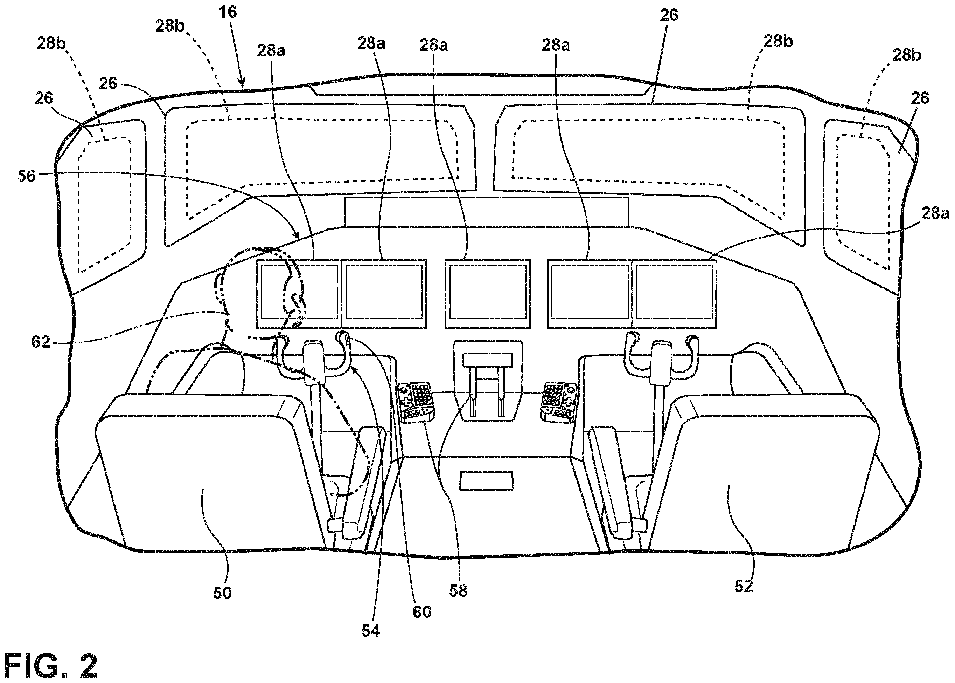

FIG. 2 illustrates a portion of the cockpit 16 of the aircraft 10. The cockpit 16 includes a pilot seat 50, a co-pilot seat 52, an aircraft control yoke 54, and a flight deck 56 having a number of flight controls 58 and the at least one display 28. A pilot 62, sitting in the pilot seat 50 facing the flight deck 56, can utilize the yoke 54 as well as the other flight controls 58 to maneuver the aircraft 10. The yoke 54 can include a toggle or button 60. It is contemplated that a control stick or other control device can alternatively be installed in the cockpit 16 instead of the yoke 54 and that such a control stick can be used to maneuver the aircraft 10. For purposes of this description, the term "yoke" is used to refer to all types of control devices.

The at least one display 28 can include multiple flight displays 28a on the flight deck 56 or at least one augmented reality display 28b located on the windshield 26. The displays 28, 28a, 28b can include primary and secondary flight displays any of which can be used to display to the pilot and flight crew a wide range of aircraft, flight, navigation, and other information used in the operation and control of the aircraft. In one non-limiting example, the multiple flight displays 28a can be configured to show weather, terrain, fixed obstacles (e.g., towers and buildings), variable obstacles (e.g., other aircraft), flight characteristics (e.g., altitude or speed), or any combination thereof.

The at least one augmented reality display 28b can be fixed, removable, or incorporated into the materials used to manufacture the windshield 26. The at least one augmented reality display 28b can be any suitable display screen such as a liquid crystal display (LCD) screen, a plasma screen, a smart glass screen, or any other type of transparent or semi-transparent screen or medium on which graphic images can be displayed. The at least one augmented reality display 28b can provide augmented reality data on the windshield 26 of the aircraft 10. The augmented reality data can be, by way of non-limiting example, a predictive virtual model of the aircraft 10 in the environment in front of the aircraft 10. The predictive virtual model of the aircraft 10 can be projected on the at least one augmented reality display 28b as an overlay in the environment currently visible to the pilot 62. Alternatively, if the environment is at least partially not visible to the pilot 62, the pilot 62 can select that both the predictive virtual model of the aircraft 10 and the current environment be projected to the at least one augmented reality display 28b. As yet a further alternative it is contemplated that the pilot does not need to actively make a selection and that such display can happen automatically based on weather conditions or time of day. This is made possible through continuous monitoring of the autonomous decision making system 30. It is further contemplated that the pilot 62 can select to have the at least one augmented reality display 28b project the predictive virtual model of the aircraft 10 in a future environment. By way of non-limiting example, the pilot 62 can view the predictive virtual model of the aircraft 10 in the future environment 5 minutes ahead of the current flight location to see how the aircraft 10 is positioned in future environment of the selected flight path.

The autonomous decision making system 30 can be a computer based reality system that uses 3D to provide pilots 62 with clear and intuitive means of understanding their flying environment. It is contemplated that computer based reality system can use 4D to provide pilots 62 with clear and intuitive means of understanding their flying environment. As described herein, "4D" is defined as 3D with the addition of a time element, such as, but not limited to a time of arrival. The autonomous decision making system 30 uses the 3D/4D imaging to improve the situational awareness of the pilot 62 by providing the pilot 62 with realistic imaging of the world outside the aircraft 10, which can be created from information and imagery from various databases.

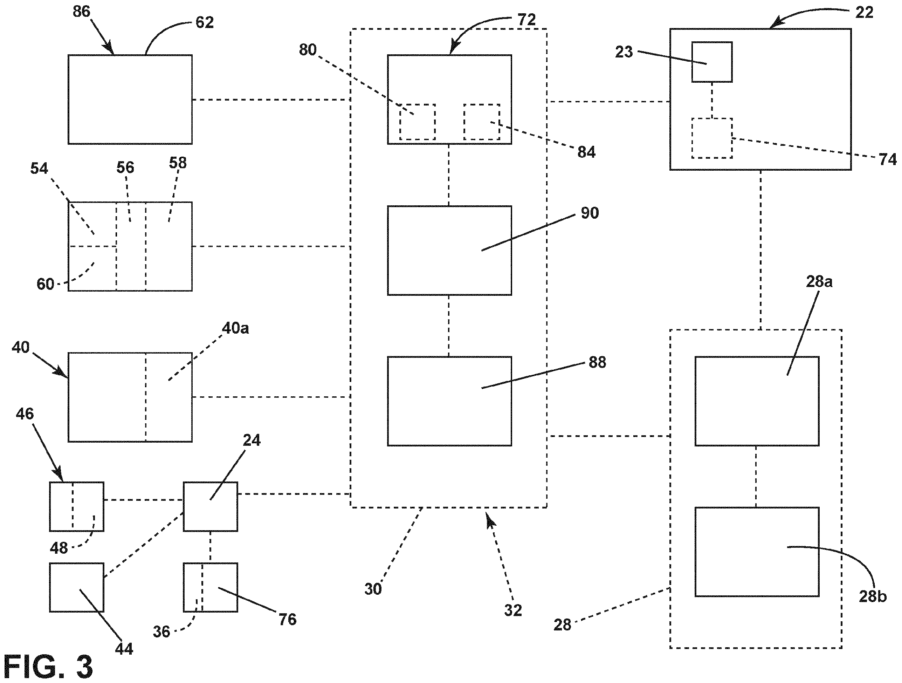

FIG. 3 further illustrates aspects of the flight management system 22 and the autonomous decision making system 30 of aircraft 10 according to aspects of the present disclosure. It will be understood that there is an ever increasing demand for aircraft systems to operate more independently and with reduced need for pilot inputs to reduce workload on pilots. It can be seen that a data module 72 is included in the autonomous decision making system 30. The data module 72 is configured to output multiple stable operating solutions based on information received or queried by the data module 72. Stable operating solutions include trajectory synchronization and negotiation that allow for the aircraft 10 to complete its destination within an acceptable time. The flight management system 22, in communication with the data module 72, can further include a computer searchable database 74. The computer searchable database 74 can be any suitable database, including a single database having multiple sets of data, multiple discrete databases linked together, or even a simple table of data. It is further contemplated that the computer searchable database 74 can be updated via the wireless communication link 24 from the ground system 46, the other aircraft 44, or other communicating device 76. Regardless of the type of database the computer searchable database 74 can be provided on storage medium on a computer or can be provided on a computer readable medium, such as a database server. It is contemplated that the computer searchable database 74 can include information relevant to determining multiple stable operating solutions of the aircraft 10. By way of non-limiting example, the computer searchable database 74 can include, among other information, flight-plan data for a variety of aircraft in the area, weather or radar data, air traffic control data, airline operational data, airline operation center information, aircraft status data, route data, etc.

The data module 72 can be configured to access or query the computer searchable database 74. It will be understood that the data module 72 can access the computer searchable database 74 via a communication network or computer network coupling the data module 72 to the computer searchable database 74. By way of non-limiting example, such a computer network can be a local area network or a larger network such as the internet. It is contemplated that the data module 72 can make repeated queries of the computer searchable database 74. By way of non-limiting example, the data module 72 can determine the multiple stable operating solutions by permutating over the computer searchable database 74 an airline operation algorithm that simulates the execution of each of the multiple routes to completion and varying for each permutation at least one of a group of inputs. Such inputs can include increasing altitude, re-routing flight path via one of a number of multiple routs, etc.

A cost module 80 capable of estimating costs for each activity type and permutation can be include in the data module 72. Such costs can relate to a cost associated with the fuel consumption for the flight maneuver, change in altitude, re-routing, etc. The data module 72 can include such cost estimations in evaluating what stable operating solutions to output. For example, the data module 72 can be designed to only output a subset of the stable operating solutions based on the efficiency of the solutions and/or the cost of the solutions. In this manner the data module 72 can simulate the operation of the aircraft and output stable operating solutions based upon efficiency and/or cost.

A learning module 84 can be included in the data module 72. The learning module 84 can be communicatively coupled to the aircraft control yoke 54, the flight deck 56, the flight controls 58, or any other device which the aircraft operations personnel 86 can use to interact with the learning module 84. Various joysticks, multi-way rocker switches, mice, trackballs, and the like can be used for additional input to the learning module 84.

The learning module 84 can learn the selection preferences of the aircraft operations personnel 86 over time and can control future displays and selection of the presented subset of the multiple stable operating solutions based on the learning. The learning module 84 can be capable of learning in a variety of ways including a combination of the choices selected by the pilot 62 or off board airline operations personnel located at the ground system 46 and the results of these and comparisons with the analysis results of other stable solutions. For example, the learning module 84 can be capable of storing the displayed multiple stable operating solutions and the resulting selection of the pilot 62 or off board aircraft operations personnel located at the ground system 46 and from this tune the priorities for costing decisions and other parameters to ensure that the prioritization on the recommended stable operating solutions reflects the real priorities of the pilot 62 or airline operations personnel. The learning module 84 can also include an off-line analysis feature where the selections of the pilot 62 or airline operations personnel are replayed for an independent analyst to rate to ensure that only good user decisions are used for tuning. The learning module 84 can also store the results of the implemented actions and the "what-ifs" of the other available actions in light of all the actual situations that developed and such a complete retrospective analysis can be used to tune future decisions.

The learning module 84 can also be configured to access the cost module 80 and can select the subset of the multiple stable operating solutions to be displayed based on the learned selection preference and the cost. The learning module 84 can present the subset of stable solutions by displaying them on the one or more of the multiple fight displays 28a or the at least on augmented reality display 28b. The at least one display 28 can illustrate a ranked order according to at least one of learned selection preference and cost. Such a ranked order can include a weighting of the learned selection preference and cost. The ranked order can be established using, by way of non-limiting example, by advanced machine learning algorithms or dee-learning algorithms. The cost module 80 can include a cost calculation for solution execution based on initial conditions, a cost calculation for actual solution executed, and a cost calculation for an optimized solution such that the learning module 84 can learn from such costing and tailor output stable operating solutions thereon.

By way of further non-limiting example, the learning module 84 can interact with the data module 72, the cost module 80, and the flight management system 22 to train itself on the most optimal route in a given scenario through the collection of training data. The training data can be used to provide decisions regarding the aircraft navigation. The learning module 84, having obtained the training data can then train additional incoming data as the aircraft 10 passes through different flight paths or conditions. The trained data of the autonomous decision making system 30 can be used to provide decisions when the aircraft 10 has to undergo difficult maneuvers or optimal flying.

It is contemplated that the data module 72 can use an exact method or artificial intelligence methodology for making decisions related to what solutions are most stable and what stable solutions should be output. The data module 72 can be populated by algorithms that enable the exploration of potential decisions, aircraft, subsystem and part availability probabilities, schedules and changes to schedules for planes, crews, maintenance, passengers, cargo, etc. through a forecast time duration. Network activity costs can be tabulated by these algorithms and can be stored. Non-limiting examples of algorithms deployed to create the stored flight operations forecasts in the database include discrete event and agent based simulation, math programming, and hybrid heuristic - simulation classes as well as reasoning modalities such as example based evidentiary, fuzzy logic, case based, supervised or unsupervised machine learning, clustering algorithms, and chaining rules. These algorithms are implemented in analytical workflows, such as to simulate future flight paths, invoking decisioning at temporal nodes along the simulated flights, and then pruning inferior scenarios from the solution set. The term "algorithm" here-in includes one or multiple of mathematical operations, data extracts, and transforms. A non-limiting example of such decisioning and how criteria are established is evidentiary reasoning.

Additionally, the data module 72 can receive or query real-time information from outside the aircraft 10. The real-time information from outside the aircraft 10 can be communicated directly or indirectly to the data module 72 from the sensors 40, the wireless communication link 24, or the flight management system 22. Information provided via the wireless communication link 24 can originate at the ground system 46, the computer or destination server 48, or the other aircraft 44, where the other aircraft 44 can be any number of other aircraft or flying devices that are capable of providing data to the aircraft 10 via the wireless communication link 24 or sensors 40.

The program for transmitting or receiving the real-time environmental data, real-time traffic data, real-time flight data, or other real-time data can include a computer program product that can include machine-readable media for carrying or having machine-executable instructions or data structures stored thereon. Such machine-readable media can be any available media, which can be accessed by a general purpose or special purpose computer or other machine with a processor. Aspects of the present disclosure will be described in the general context of a method that can be implemented by a program product including machine-executable instructions such as program code, for example, in the form of program modules. Generally, program modules include routines, programs, objects, components, data structures, algorithms, etc. that have the technical effect of performing particular tasks or implement particular abstract data types. Machine-executable instructions, associated data structures, and program modules represent examples of program code for executing the method disclosed herein. Machine-executable instructions can include, for example, instructions and data, which cause a general purpose computer, special purpose computer, or special purpose processing machine to perform a certain function or group of functions.

An environment module 88 is configured, based on various inputs, to output environment data of an environment in front of the aircraft. The environment in front of the aircraft can include an environment visible to a pilot through the windshield 26. The environment module 88 can be included as a component of or in communication with the autonomous decision making system30. Communication between the data module 72 and the environment module 88 allows information to be passed back and forth between the modules.

A Global Positioning System (GPS) can be in communication with or included in the environment module 88 to provide reference frame information. Reference frame information can include position and heading as well as velocity and acceleration. The GPS can provide coordinate data about the geo-position of the aircraft 10. The GPS can provide the environment module 88, the data module 72, or the flight management system 22 with data regarding the position, the altitude, or the heading and speed of the aircraft 10. Additionally or alternatively reference frame information can be obtained from the computer searchable database 74, other components of the flight management system 22, the sensors 40, or the other aircraft 44, the ground systems 46, or other communication device 76 via wireless communication link 24. By way of non-limiting example, the GPS can provide the environment module with a location. Using that location, the environment module 88 can query the computer searchable database 74 to obtain environmental data.

Alternatively or additionally, the computer searchable database 74 or another updateable database communicatively coupled to the environment module 88 can store imagery data that can include geo-specific terrain, man-made objects including runway and airport layouts, or additional imagery including aircraft traffic information. Additionally, input to the environment module 88 can be provided by one or more of the sensors 40 or the at least one optical sensor 40a.

A display module 90 is also included in the autonomous decision making 30. The display module 90 is configured to provide augmented reality data on the windshield 26 of the aircraft 10. The augmented reality data can be the combination of the environment data from the environment module 88 and the multiple stable operating solutions from the data module 72. The augmented reality data can be communicated to and displayed on the on the at least one augmented reality display 28b. One non-limiting example of how the augmented reality data can be presented on the at least one augmented reality display 28b is as a predictive virtual model of the aircraft 10 that is in the environment in front of the aircraft 10. Both the virtual model and the environment can be displayed. Alternatively, the predictive virtual model in the normal field of view through the windshield 26 can be displayed.

The display module 90 can include a graphics processor that can be any suitable graphics processor capable of generating images on the at least one augmented reality display 28b. Additionally or alternatively, the display module 90 can present the augmented reality data on one or more of the multiple flight displays 28a. It is also contemplated that the display module 90 can display the augmented reality data on any suitable display including, but not limited to, a headset, a heads-up display, a flight bag, a tablet, or flight deck display (not illustrated).

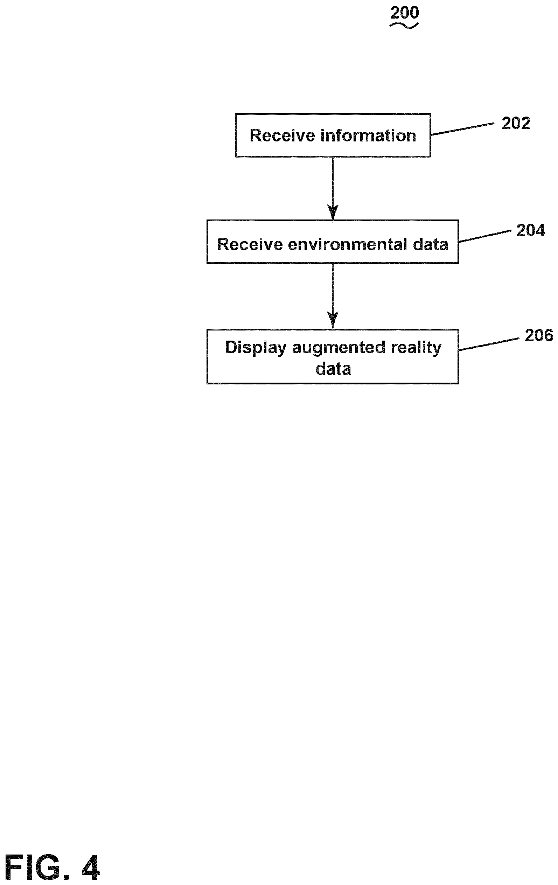

FIG. 4 is a flow chart diagram illustrating a method 200 of operating the aircraft 10. While not illustrated in the method 200 it will be understood that the method 200 can begin by flying of the aircraft 10. At 202, information is received related to the aircraft 10 that can include, but is not limited to, speed, altitude, other flight envelope data, flight path or flight plan, waypoints, maintenance updates, weather conditions, weather radar, GPS location, or air traffic data.

By way of non-limiting example, the information received at 202 can be sent or accessed from the flight management computer 23, the computer searchable database 74, aircraft operations personnel, the aircraft control yoke 54, the flight deck 56, the flight controls 58, the sensors 40, or the wireless communication link 24. The wireless communication link 24 can receive information from the ground system 46, the computer or destination server 48, the other aircraft 44, or another other communicating device 76 that can include additional members of the SWIM network 36. Information can be received by the flight management system 22. Additionally or alternatively, the information can be received by, communicated to, or obtained by the autonomous decision making system 30 or data module 72.

It is further contemplated that the information received by the data module 72 can be shared with the learning module 84 or the cost module 80. Based on the information received, the learning module 84, or the cost module 80, the data module 72 can determine and outputs multiple stable operating solutions to at least the display module 90. Optionally, the display module 90 can communicate and display the multiple stable operating solutions on the at least one augmented reality display 28b.

At 204, environmental data is received by the autonomous decision making system 30 and communicated to at least the environment module 88. Environmental data can be communicated to the autonomous decision making system30 or the environment module 88 from the data module 72, the flight management system 22, the flight management computer 23, or the computer searchable database 74. Additionally, environmental data can be communicated to the autonomous decision making system 30 or the environment module from the sensors 40 that include the at least one optical sensor 40a. Additionally or alternatively, environmental data can be received via the wireless communication link 24 from the ground system 46, the computer or destination server 48, the other aircraft 44, or another other communicating device 76.

Based on the environmental data, the environment module 88 can determine and output an environment visible to the pilot 62 through the windshield 26 of the aircraft 10 to at least the display module 90. It is contemplated that the output from the environmental module 88 can be communicated to the at least one augmented reality display 28b, the multiple flight displays 28a, the flight management system 22, or the data module 72.

The display module 90 uses the environment visible to the pilot 62 through the windshield 26 of the aircraft 10 and the multiple stable operating solutions to determine and output augmented reality data. At 206, the output augmented reality data is displayed on the at least one augmented reality display 28b. Alternatively, the augmented reality data can be displayed by at least one of the multiple flight displays 28a.

Among other things, a predictive virtual model of the aircraft 10 can be displayed on the windshield 26 as augmented reality data. The predictive virtual model of the aircraft 10 can be projected to at least one of the augmented reality display(s) 28b as an overlay in the environment currently visible to the pilot 62. Alternatively, if the environment is at least partially not visible to the pilot 62, the pilot 62 can select that both the predictive virtual model of the aircraft 10 and the current environment be projected to the at least one augmented reality display 28b. It is further contemplated that the pilot 62 can select to have the at least one augmented reality display 28b project the predictive virtual model of the aircraft 10 in a future environment. By way of non-limiting example, the pilot 62 can view the predictive virtual model of the aircraft 10 in the future environment 5 minutes ahead of the current flight location to see how the aircraft 10 is positioned in future environment of the selected flight path.

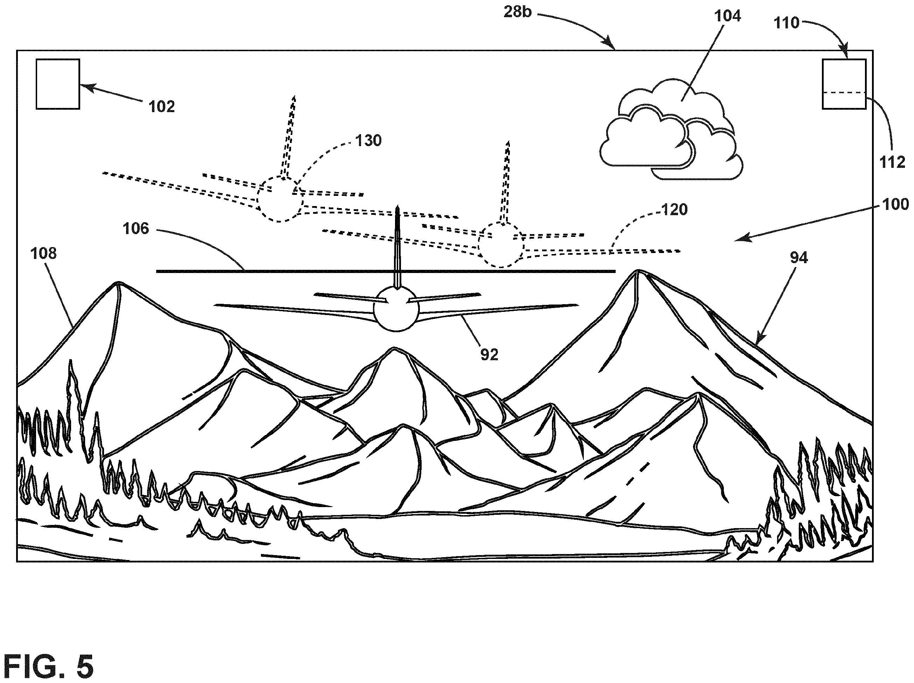

Optionally and additionally, the predictive virtual model can present a subset of stable operating solutions based on the learning module 84 as further illustrated in FIG. 5.

By way of non-limiting example, at 202, information is received by data module 72. The data module 72 receives weather radar from the wireless communication link 24, GPS location from the sensors 40, and flight plan data from the computer searchable database 74. The data module 72 concludes that based on imminent weather, the flight path should be adjusted. The learning module 84 indicates that the pilot 62 tends to fly so that disturbances are completely avoided. The cost module 80 can then calculate several paths that avoid disturbances based on at least fuel efficiency. The data module 72 can then output one or more stable operation solutions based on the tendencies from the learning module 84 in light of the cost module 80. The data module 72 can then provide the display module 90 with multiple stable operating solutions. The display module 90 can combine the multiple stable operating solutions with the environmental data provided by the environment module 88. The display module 90 can then present the pilot 62 with at least one modified route. The modified route can be communicated to the pilot 62 by indicating the upcoming navigational procedure 112 on the at least one augmented reality display 28b.

It is contemplated that in addition to the predictive virtual model of the aircraft 10, multiple stable operating solutions can be presented so that the pilot can follow the one of the multiple stable operating solutions by completing maneuvers that overlap the predictive virtual model of the aircraft 10 with a selected stable operating solution.

During operation, the pilot 62 (FIG. 2) can visually monitor the flight path of the aircraft 10 through the windshield 26. The pilot 62 and other members of the flight crew can also use the multiple flight displays 28a to enhance their decision-making abilities my looking at any of the information displayed thereon including but not limited weather, terrain, fixed obstacles (e.g., towers and buildings), variable obstacles (e.g., other aircraft), flight characteristics (e.g., altitude or speed), or any combination thereof. Further still, the pilot 62 (FIG. 2) can utilize the augmented reality data to assist in operating the aircraft 10.

By way of non-limiting example, FIG. 5 illustrates at least one augmented reality display 28b as a possible output of the augmented reality data as communicated from the display module 90. A rear view of a 3D/4D model 92 based on the model of the aircraft 10 can be used as the predictive virtual model of the aircraft 10. The rear view of the 3D model 92 is illustrated in the environment 94 in front of the aircraft 10. It is contemplated that the environment 94 onto which the rear view of the 3D model 92 is projected is the environment that is currently visible to the pilot 62 through the windshield 26. It is further contemplated that a projected environment 94a can be projected onto the at least one augmented reality display 28b with the rear view of the 3D model 92 appropriately located within the projected environment 94a. Optionally, the projected environment 94a can be activated by the pilot 62 based on current visibility through the windshield such as via the toggle or button 60 on the yoke 54.

Additionally or alternatively, a future environment can be projected onto the at least one augmented reality display 28b the illustrates the rear view of the 3D model 92 in an environment a predetermined or manually selected length of time head of the current location based on the current or selected flight path in this manner the rear view of a 3D model 92 can be shown in the future.

A dynamic overlay 100 of at least one piece of information can be displayed with the predictive virtual model. Information included in the dynamic overlay 100 can include, but is not limited to, current route data 102, a weather update 104, an artificial horizon 106, terrain information 108, or a navigational signal 110.

The current route data 102 can include text or symbolic representations. By way of non-limiting example, the current route data 102 can be a map illustrating the entire route with current location marked, a GPS output, symbolic arrows indicating current direction, text indicating speed, or a compass indicating direction.

The weather update 104 can be illustrated by simulating weather on the at least one augmented reality display 28b in the context of the rear view of the 3D model 92 or the environment 94. Additionally or alternatively, the weather update 104 can be displayed as text on the rear view of the 3D model 92.

The artificial horizon 106 can, by way of non-limiting example, be represented by a horizontal line on the at least one augmented reality display 28b in the context of the rear view of the 3D model 92 or the environment 94.

The terrain information 108 can be combined or included in the environment 94. Alternatively, the terrain information 108 can include relative distances between the aircraft 10 and aspects of the environment 94. It is contemplated that terrain information 108 can include any information, data, or numerical values pertaining to the environment 94 of interest to the pilot 62.

It is contemplated that aspects of the dynamic overlay 100 are completely customizable by the aircraft operations personnel 86. For example, the pilot 62 can select what aspects of the dynamic overlay 100 are visible as well as adjusting features, distances, and times within the information provided.

The navigational signal 110 can indicate a recommendation of changing the current flight path. It is contemplated that the navigational signal 110 activates in advance of an upcoming navigational procedure 112. It is contemplated that the navigational signal 110 or the upcoming navigational procedure 112 can provide a variety of known navigational signals or directions to the pilot 62 related to the operation of the aircraft 10. Non-limiting examples include a change in altitude, a change in direction, a change in speed, or a change in flight path.

The at least one augmented reality display 28b can illustrate multiple stable operating solutions. By way of non-limiting example, the multiple stable operating solutions are illustrated by a first solution aircraft 120 and a second solution aircraft 130 as alternatives to the flight path of the rear view of the 3D model 92. The first solution aircraft 120 and the second solution aircraft 130 are illustrated in the context of the environment 94. It is contemplated that the first solution aircraft 120 and the second solution aircraft 130 are a subset of the multiple stable operating solutions. By way of non-limiting example, the first solution 120 can indicate a route that completely avoids disturbances, but is moderately expensive whereas the second solution 130 can indicate a route that is optimal in that it saves fuel but can include a slightly trickier maneuver.

The learning module 84 or the cost module 80 can be used to establish what subset of the multiple stable operating solutions are displayed on the at least one augmented reality display 28b. For example, the most fuel efficient route could be excluded from the display because it is not optimal in the respect that the route does not avoid enough of the possible disturbance.

The rear view of the 3D model 92, the first solution aircraft 120, or the second solution aircraft 130 can define a follow-me aircraft configured to activate an alert in advance of an upcoming navigational procedure 112.

It is contemplated that the pilot can confirm the flight path of the aircraft by overlapping the rear view of the 3D model 92 with the first solution aircraft 120 or the second solution aircraft 130. It is further contemplated that a signal can indicate the overlap of the rear view of the 3D model 92 with the first solution aircraft 120 or the second solution aircraft 130 is complete and verification that the aircraft 10 is following one of the multiple stable operating solutions.

It is contemplated that the autonomous decision making system 30 can take control, providing autonomous operation of the aircraft 10 if the pilot 62 becomes incapacitated; having determined the optimal route. It is further contemplated that the autonomous decision making system 30 can communicate with the ground system 46 of its operation of the aircraft 10. The communication can include, but is not limited to, the optimal route determined by the autonomous decision making system 30 or the projected arrival time.

It will assist the pilot working in a single-pilot aircraft configuration, as this system will act as a secondary pilot in such scenarios. It case of an emergency, where the aircraft behaves abnormally and the pilot cannot recover the aircraft maneuver, the system will take control and autonomously fly the aircraft or communicate the current situation to the ground crew for further assistance.

Aspects of the present disclosure provide for a variety of benefits. The autonomous decision making system can allow a pilot to make changes to a flight path before it becomes an emergency situation, making the change in flight path a more gradual change. The autonomous decision making system can alert a pilot to a better flight path based on environment and cost. The selections for an alternate flight path can be further refined by the learning module that monitors pilot selections over a period of time. The autonomous decision making system can assist in situation of low to no visibility allowing a pilot to make appropriate flight path changes, land, or take off looking at a representation of the environment that they would be able to see in better weather or light conditions. Additional benefits from the method of operating an aircraft can include that the follow-me aircraft alerts the pilot in advance of upcoming navigational procedure(s). The aspects described herein can be especially beneficial if the pilot working in a single-pilot aircraft.

Further, the autonomous decision making system can take control of the aircraft in case of pilot incapacity and fly the aircraft on the best optimal route. The autonomous decision making system can also take control and autonomously fly in the case where the aircraft behaves abnormally and the pilot cannot recover the aircraft maneuver. The autonomous decision making system can communicate the current situation to the ground crew for further assistance if control of the aircraft has been taken.

The autonomous decision making system can be in the form of the aircraft augmented reality system that can have the technical effect of providing a pilot with a projection of a predictive virtual model of the aircraft on the windshield. This allows a pilot to view the future position of the aircraft in the context of environment visible to a pilot through a windshield of the aircraft. The aircraft augmented reality system can have the technical effect of providing a pilot with a projection of a predictive virtual model of the aircraft as well as the projection of one or more stable operating solutions on the windshield. This allows a pilot to view the possible alternate routes in the context of environment visible to a pilot through a windshield of the aircraft. When the environment is not visible through the windshield, the aircraft augmented reality system can additionally project the environment on the windshield that would be visible through the windshield in optimal visibility conditions. Further, the aircraft augmented reality system can allow pilots to view the location of the aircraft in future environments that are a selected time or distance from their current location in the flight path.

The autonomous decision making system can also have the technical effect of operating the aircraft in the pilot becomes incapacitated.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
1. An aircraft augmented reality system, comprising a data module configured to receive information from a flight management system of the aircraft, an environment module to process environment data of an environment in front of the aircraft, and a display module configured to provide augmented reality data on the windshield of the aircraft, the display module configured to present a predictive virtual model of the aircraft, based on the information from the flight management system, in the environment in front of the aircraft as well as a dynamic overlay of at least one piece of information.
2. The system of any preceding clause wherein the predictive virtual model of the aircraft is a rear view of a 3D model.
3. The system of any preceding clause wherein the dynamic overlay of at least one piece of information includes current route data.
4. The system of any preceding clause wherein the dynamic overlay further comprises at least one of a weather update, an artificial horizon, terrain information, or a navigational signal.
5. The system of any preceding clause wherein the navigational signal activates in advance of an upcoming navigational procedure.
6. The system of any preceding clause wherein the display module is configured to display the dynamic overlay to appear, to the pilot of the aircraft, to be superimposed on an object in the environment in front of the aircraft.
7. The system of any preceding clause wherein the environment module receives image data from at least one optical sensor.
8. The system of any preceding clause wherein the data module is further configured to receive real-time information from outside the aircraft and the data module is configured to output multiple stable operating solutions for the aircraft based on the real-time information and the display module is configured to display the multiple stable operating solutions on the windshield.
9. The system of any preceding clause, further comprising a learning module learning selection preferences over time of the multiple stable operating solutions by airline operation personnel and controlling future displays of a subset of stable operating solutions based on the learning, wherein the learning module is executed on a processor configured to access the stable operations outputted by the data module.
10. The system of any preceding clause, further comprising a cost module that calculates a cost for each of the multiple stable operating solutions, wherein the cost module is executed on the processor configured to access the multiple stable operating solutions.
11. The system of any preceding clause wherein the learning module is configured to access the cost calculated by the cost module and selects the subset of stable operating solutions based on the learned selection preference and the cost.
12. The system of any preceding clause wherein the data module receives real-time information from a system wide information management network.
13. The system of any preceding clause wherein the data module receives real-time information including at least one of flight-plan data, weather data, air traffic control data, or airline operational data.
14. A method of operating an aircraft that includes receiving information from a flight management system of the aircraft, receiving environment data for an environment in front of the aircraft, and displaying augmented reality data in the form of a predictive virtual model of the aircraft, based on the information from the flight management system, on the windshield of the aircraft in the environment in front of the aircraft as well as a dynamic overlay of at least one piece of information wherein the predictive virtual model of the aircraft defines a follow-me aircraft configured to activate an alert in advance of an upcoming navigational procedure.
15. The method of any preceding clause wherein the receiving environment data includes receiving image data from an external facing optical capture system mounted to the aircraft.
16. The method of any preceding clause wherein the receiving environment data includes querying data from an onboard database based on location.
17. The method of any preceding clause, further comprising receiving real-time information from outside the aircraft and determining multiple stable operating solutions for the aircraft based on the real-time information and displaying the multiple stable operating solutions on the windshield.
18. The method of any preceding clause, further comprising learning selection preferences over time of the multiple stable operating solutions by airline operation personnel using a learning module and controlling displays of a subset of stable operating solutions based on the learning.
19. The method of any preceding clause, further comprising calculating a cost for each of the multiple stable operating solutions, wherein a cost module is executed on a processor configured to access the multiple stable operating solutions and wherein the learning module is configured to access the cost calculated by the cost module and selects the subset of stable operating solutions based on the learned selection preferences and the cost.
20. An aircraft that includes a flight management system of the aircraft for autonomously operating the aircraft, and an autonomous decision making system configured to determine a stable operating solution of the aircraft, further comprising: a data module configured to receive information, a cost module for calculating a cost of multiple stable operating solutions, and a learning module configured to learn preferences over time of the multiple stable operating solutions, wherein the autonomous decision making system is configured to select a stable operating solution from the multiple stable operating solutions and communicate the stable operating solution to the flight management system for autonomous operation of the aircraft.

## Claims

1. An aircraft (10) augmented reality system (32), comprising:
a data module (72) configured to receive information from a flight management system (22) of the aircraft (10);
an environment module (88) to process environment data of an environment (94) in front of the aircraft (10); and
a display module (90) configured to provide augmented reality data on the windshield (26) of the aircraft (10), the display module (90) configured to present a predictive virtual model (92) of the aircraft (10), based on the information from the flight management system (22), in the environment (94) in front of the aircraft (10) as well as a dynamic overlay (100) of at least one piece of information (102, 104, 106, 108, 110, 112).

2. The system (32) of claim 1 wherein the predictive virtual model (92) of the aircraft (10) is a rear view of a 3D model (92).

3. The system (32) of any of claims 1-2 wherein the dynamic overlay (100) of at least one piece of information includes current route data (102).

4. The system (32) of claim 3 wherein the dynamic overlay (100) further comprises at least one of a weather update (104), an artificial horizon (106), terrain information (108), or a navigational signal (110).

5. The system (32) of claim 4 wherein the navigational signal (110) activates in advance of an upcoming navigational procedure (112).

6. The system (32) of any of claims 1-5 wherein the display module (90) is configured to display the dynamic overlay (100) to appear, to the pilot (62) of the aircraft (10), to be superimposed on an object in the environment (92) in front of the aircraft (10).

7. The system (32) of any of claims 1-6 wherein the environment module (88) receives image data from at least one optical sensor (40a).

8. The system (32) of any of claims 1-7 wherein the data module (72) is further configured to receive real-time information from outside the aircraft (10) and the data module (72) is configured to output multiple stable operating solutions for the aircraft (10) based on the real-time information and the display module (90) is configured to display the multiple stable operating solutions on the windshield (26).

9. The system (32) of claim 8, further comprising a learning module (84) learning selection preferences over time of the multiple stable operating solutions by airline operation personnel (62) and controlling future displays of a subset of stable operating solutions based on the learning, wherein the learning module (84) is executed on a processor (22, 30) configured to access the stable operations outputted by the data module (72).

10. The system (32) of claim 9, further comprising a cost module (80) that calculates a cost for each of the multiple stable operating solutions, wherein the cost module (80) is executed on the processor (22, 30) configured to access the multiple stable operating solutions.

11. The system of claim 10 wherein the learning module (84) is configured to access the cost calculated by the cost module (80) and selects the subset of stable operating solutions based on the learned selection preference and the cost.

12. The system (32) of any of claims 8-11 wherein the data module (72) receives real-time information from a system wide information management network (36).

13. The system (32) of any of claims 8-11 wherein the data module (72) receives real-time information including at least one of flight-plan data, weather data, air traffic control data, or airline operational data.

14. A method (200) of operating an aircraft (10), the method (200) comprising:
receiving information (202) from a flight management system (22) of the aircraft (10);
receiving environment data (204) for an environment (94) in front of the aircraft (10); and
displaying augmented reality data (206) in the form of a predictive virtual model (92) of the aircraft (10), based on the information from the flight management system (22), on the windshield (26) of the aircraft (10) in the environment (94, 94a) in front of the aircraft (10) as well as a dynamic overlay (100) of at least one piece of information wherein the predictive virtual model (92) of the aircraft (10) defines a follow-me aircraft configured to activate an alert in advance of an upcoming navigational procedure (112).

15. The method (200) of claim 14 wherein the receiving environment data (204) includes receiving image data from an external facing optical capture system (40a) mounted to the aircraft (10).
